# EUROPEAN PATENT SPECIFICATION

(11) **EP 2 253 178 B1**
(45) Date of publication and mention of the grant of the patent: **07.03.2012**
(21) Application number: 09710454.1
(22) Date of filing: 26.01.2009
(51) Int. Cl.: H04W 88/18

(54) **METHOD AND APPARATUSES FOR CODEC CHANGE FOR ONGOING CALLS ON IP-BASED A INTERFACE**
VERFAHREN UND VORRICHTUNGEN ZUR CODEC-ÄNDERUNG BEI LAUFENDEN ANRUFEN AUF IP-BASIERTER A-SCHNITTSTELLE
MÉTHODE ET DISPOSITIFS POUR CHANGER LE CODEC POUR DES APPELS EN COURS SUR UNE INTERFACE A À BASE DE PROTOCOLE IP

(30) Priority: 11.02.2008 EP 08425081
(43) Date of publication of application: 24.11.2010
(73) Proprietor: Nokia Siemens Networks OY, 02610 Espoo (FI)
(72) Inventor: PAROLARI, Sergio, I-20133 Milano (IT)
(86) International application number: PCT/EP2009/050844
(87) International publication number: WO 2009/100979

(56) References cited:
- "Draft CR to TR 43.903-003: Input to chapter 5.2.3, G2-080090" 3RD GENERATION PARTNERSHIP PROJECT, [Online] 17 January 2008 (2008-01-17), pages 1-4, XP002567875 Retrieved from the Internet: URL:http://www.3gpp.org/ftp/tsg_geran/Wg2_ Protocol_Aspects/GERAN2_36bis_Ljubljana/Do cs/G2-080090.zip>
- "3rd Generation Partnership Project;Technical Specification Group GERAN;A-interface over IP Study (AINTIP);(Release 8)" 3GPP DRAFT; GP-080414 TR 43903-100 WITH ESSENTIAL REVISION MARKS AGAINST -004, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 22 February 2008 (2008-02-22), pages 1-59, XP050019725 [retrieved on 2008-02-22]
- "Draft CR to TR 43.903-003: Input to Deployment Scenarios: Clean version, G2-080093" 3RD GENERATION PARTNERSHIP PROJECT, [Online] 17 January 2008 (2008-01-17), pages 1-9, XP002567876 Retrieved from the Internet: URL:http://www.3gpp.org/ftp/tsg_geran/Wg2_ Protocol_Aspects/GERAN2_36bis_Ljubljana/Do cs/G2-080093.zip>
- "3rd Generation Partnership Project;Technical Specification Group GERAN;A-interface over IP Study (AINTIP);(Release 8)" 3GPP DRAFT; PROPOSED CLEANUP OF TR 43.903 UP TO CHAPTER 6.4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 November 2007 (2007-11-16), pages 1-54, XP050019350 [retrieved on 2007-11-16]

## Description

One of the main goals of the definition of an IP-based A interface is the possibility to avoid using the G.711 codec on the A interface and more in general to avoid any transcoding in a mobile to mobile call. In other words the goal is to allow end-to-end Transcoding-Free Operation (TrFO) in GERAN networks.
In order to achieve this, an end-to-end codec negotiation is needed when the call is first established: the two BSSs serving the two users communicate their codec capabilities (for that call, in that specific cell) to the Core Network at call setup. Then the Core Network finally decides to use - for that specific call - one of the codecs jointly supported by both the BSSs. A general description of this mechanism together with the underlying architecture is shown in 3GPP Tdoc G2-080090: "Draft CR to TR 43.903-003: Input to chapter 5.2.3".

However, when handover needs to be performed to a cell not supporting the codec negotiated at call setup (e.g. codec x), the MGW connected to the target BSS (the BSS including the cell where the mobile station is moved to) needs to insert a transcoding resource to perform transcoding between the codec x (negotiated at call setup and used on one leg of the call) and codec y (used in the other leg of the call in the target cell after handover). When this happens Transcoder-Free Operation is interrupted and voice quality might be degraded. To re-establish TrFO, a codec re-negotiation has to be started. For instance the Core Network could trigger a codec change (from x to y) on the leg of the call where codec x is still in use, to align to the other leg of the call where the codec y is used. If this were possible, the MGW could remove the transcoding resource from the path and re-establish Transcoder-Free Operation.
The problem is that - although codec re-negotiations are currently possible within the Core Network - there is currently no defined procedure to trigger a codec change from the Core Network to the BSS.
One of the related issues is to provide a mechanism whereby the BSS informs the Core Network about the codecs it can support for the ongoing call, before the Core Network triggers a codec change towards a specific codec (i.e. codec y in the example above). Note that although the BSS communicates its codec capabilities at call setup, this is a dynamic information related to a specific time instant in a specific cell and might change in time, e.g. due to overload conditions (when only half-rate codecs can be used). Therefore a mechanism is needed to update this information for an ongoing call.

The proposal to solve this problem consists in:
1. The definition of a signalling message sent by the MSC to the BSS to trigger a feedback from the BSS about its current codec capabilities regarding a specific ongoing call
2. The definition of a signalling message sent by the BSS to the MSC containing the current codec capabilities (i.e. a BSS-PCL, BSS-Preferred Codec List) and the IP/UDP termination at the BSS to be used by the Core Network (in particular by the MGW) as a destination point for user data sent with the new codec.

Then the idea is to reuse existing messages on the A interface: "Handover Command" from the MSC to the BSS (to finally trigger the codec change) and "Handover Complete" from the BSS to the MSC (to confirm the handover/codec change to the MSC).

The message issued by the MSC to receive the current BSS codec capabilities could be named something like "Codec Change Request". But considering that on the radio interface a (possibly intra-cell) "Handover Command" would be finally used to modify the codec, to minimize the needed changes it makes sense to name the probe message from the MSC as "Internal Handover Request" or "Internal Handover Enquiry". This message is different from a legacy "Handover Request" sent to the target BSS during the preparation phase of an inter-BSS handover: its goal is to get back the updated BSS codec capabilities to handle a specific call and no specific target cell is indicated in the message (the primary goal is to change the codec, not necessarily the cell, and typically an intra-cell handover would be finally triggered in this case). On the other hand a MSC-PCL, MSC-Preferred Codec List could be included in the "Internal Handover Enquiry" message to inform the BSS about the MSC codec preferences. The BSS might then use this information to decide a possible target cell that meets such requirements.

When receiving the "Internal Handover Enquiry" message from the MSC, the BSS responds with an "Internal Handover Required" containing:
o A target cell. This shall be a cell controlled by the same BSS and could be the same cell where the call is currently ongoing. Alternatively this could also be a cell where the BSS could better satisfy the MSC codec preferences expressed in the MSC-PCL contained in the "Internal Handover Enquiry" message
o A list with the current codec capabilities, i.e. the BSS-PCL, in the cell where the BSS intends to handle the call after the handover
o An IP/UDP termination at the BSS(IP/UDP Tbss) to be used as a destination point for user data sent by the MGW with the finally MSC selected codec

This message is different from a legacy "Handover Required" sent to the MSC during the preparation phase of an inter-BSS handover: by sending this message the BSS already acknowledges the possibility to support the call in the target cell (which is controlled by the same BSS) together with the information of the supported codec and IP/UDP termination to be used, so that no subsequent "Handover Request"/"Handover Request Acknowledge" message exchange is needed in the preparation phase.

When receiving the "Internal Handover Required" message from the BSS, the MSC selects a new codec (SC, Selected Codec) taking into account the BSS-PCL and the need to re-establish TrFO.
The Selected Codec and the new IP/UDP Tbss termination at the BSS are communicated to the MGW so that it can add another termination towards the BSS. The MGW acknowledges this request by sending back to the MSC the new IP/UDP termination at the MGW (IP/UDP Tmgw).

At this point in time existing messages are used on the A interface to trigger the handover execution phase. In particular, to trigger the codec change (and possibly a cell change, if required by the BSS) the "Handover Command" message is sent by the MSC to the BSS, including the Selected Codec together with the new IP/UDP Tmgw termination. A legacy handover procedure is performed on the radio interface and then the BSS finally confirms the handover/codec change to the MSC with the "Handover Complete" message.

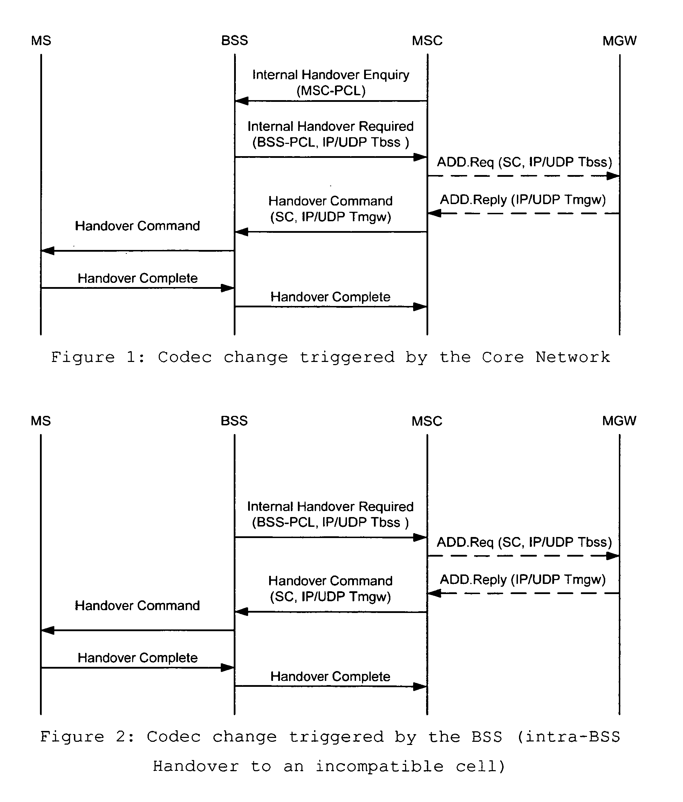

The overall procedure is described in Figure 1.

The described approach for a codec change triggered by the Core Network can be reused also in case of an intra-BSS handover to an "incompatible cell", i.e. a target cell where a codec has to be used which is incompatible with respect to the codec used in the source cell. For instance, this could be the case of a congested cell where only half rate codecs can be used (and the codec in use before the handover is incompatible with half rate codecs).
In this scenario the handover cannot be handled internally in the BSS by informing the MSC only at the end of the procedure with the 'Handover Performed" message. In fact, before performing the handover, the BSS needs to ask the Core Network to select a codec that can be supported in the target cell.
This can be done by issuing an unsolicited "Internal Handover Required" message, not triggered by an "Internal Handover Enquiry" message, but by the actual need to perform an internal handover and change the codec at the same time. Then the procedure would continue exactly as in the case of a codec change triggered by the Core Network.

The procedure for an intra-BSS handover to an incompatible cell is described in Figure 2.

Note: the fact that codec has to be changed during an intra-BSS handover to an incompatible cell also means that the MGW connected to the BSS needs to insert a transcoding resource to perform transcoding between the codec used in the source cell (and likely used on the other leg of the call) and the codec used in the target cell after handover. This breaks Transcoder-Free Operation so that further codec re-negotiations might be triggered to re-establish end-to-end TrFO.

### List of acronyms

- BSS: Base Station Subsystem
- BSC: Base Station Controller
- BTS: Base Transceiver Station
- GERAN: GSM/EDGE Radio Access Network
- IP: Internet Protocol
- MS: Mobile Station
- MSC: Mobile Switching Centre
- MGW: Media GateWay
- PCL: Preferred Codec List
- SC: Selected Codec
- TrFO: Transcoder Free Operation
- UDP: User Datagram Protocol

### List of references

[1] 3GPP Tdoc G2-080090: "Draft CR to TR 43.903-003: Input to chapter 5.2.3"

## Claims

1. A method to perform codec changes for ongoing calls on an IP-based A interface between a base station subsystem and a mobile switching center, where a transcoding functionality is located in a Media Gateway, the method being based on a handover procedure, and comprising a preparation and an execution phase, wherein the execution phase comprises a sending of a handover command from the mobile switching center to the base station subsystem, and where signalling messages are sent between the base station subsystem and the mobile switching center,
**characterized by** the method comprising the steps of:
- signalling, during said preparation phase, from the mobile switching center to the base station subsystem, an Internal Handover Enquiry message, wherein said Internal Handover Enquiry message includes an MSC-Preferred Codec List; and
- signalling, during said preparation phase, in response to the Internal Handover Enquiry message, from the base station subsystem to the mobile switching center, an Internal Handover Required message, said Internal Handover Required message containing a target cell, a list containing current codec capabilities in said target cell and a IP/UDP termination at said base station subsystem.

2. A method according to claim 1 wherein the Internal Handover Enquiry message is sent by said mobile switching center to said base station subsystem to trigger a feedback from said base station subsystem about its current codec capabilities regarding a specific ongoing call.

3. A method according to claim 1 where the execution phase reuses on said IP-based A interface the handover command from the mobile switching center to the base station subsystem and a handover complete message from the base station subsystem to the mobile switching center.

4. A base station subsystem (BSS) comprising means arranged for performing a codec change for ongoing calls on an IP-based A interface with a preparation phase and an execution phase, wherein the execution phase comprises sending of a handover complete message from the base station subsystem to a mobile switching center,
**characterized in that** the means are further arranged for
- receiving, during said preparation phase, an Internal Handover Enquiry message, wherein said Internal Handover Enquiry message includes an MSC-Preferred Codec List; and
- transmitting, during said preparation phase, an Internal Handover Required message to the mobile switching center, said Internal Handover Required message containing a target cell, a list containing current codec capabilities in said target cell and a IP/UDP termination at said base station subsystem.

5. A mobile switching center (MSC) comprising means arranged for performing a codec change for ongoing calls on an IP-based A interface with a preparation phase and an execution phase, wherein the execution phase comprises a sending of a handover command from the mobile switching center to the base station subsystem, and
**characterized in that** the means are further arranged for transmitting, during said preparation phase, an Internal Handover Enquiry message to a base station subsystem and wherein said Internal Handover Enquiry message includes an MSC-Preferred Codec List and wherein the means are further arranged for receiving, during said preparation phase, an Internal Handover Required message from said base station subsystem containing a target cell, a list containing current codec capabilities in said target cell and a IP/UDP termination at said base station subsystem.

## Patentansprüche

1. Verfahren zum Durchführen von Codec-Änderungen für ablaufende Anrufe auf einer auf IP basierenden A-Schnittstelle zwischen einem Basisstationssubsystem und einer Mobilvermittlungsstelle, wobei sich eine Transcodierungsfunktionalität in einem Media Gateway befindet, wobei das Verfahren auf einer Handover-Prozedur basiert und eine Vorbereitungs- und eine Ausführungsphase umfasst, wobei die Ausführungsphase Einsenden eines Handover-Befehls von der Mobilvermittlungsstelle zu dem Basisstationssubsystem umfasst und wobei Signalisierungsnachrichten zwischen dem Basisstationssubsystem und der Mobilvermittlungsstelle gesendet werden,
**dadurch gekennzeichnet, dass** das Verfahren die folgenden Schritte umfasst:
- Signalisieren einer Nachricht Internal Handover Enquiry von der Mobilvermittlungsstelle zu dem Basisstationssubsystem während der Vorbereitungsphase, wobei die Nachricht Internal Handover Enquiry eine MSC-Preferred Codec List umfasst; und
- Signalisieren einer Nachricht Internal Handover Required als Reaktion auf die Nachricht Internal Handover Enquiry von dem Basisstationssubsystem zu der Mobilvermittlungsstelle während der Vorbereitungsphase, wobei die Nachricht Internal Handover Required eine Zielzelle, eine aktuelle Codec-Fähigkeiten in der Zielzelle enthaltende Liste und eine IP/UDP-Terminierung in dem Basisstationssubsystem enthält.

2. Verfahren nach Anspruch 1, wobei die Nachricht Internal Handover Enquiry von der Mobilvermittlungsstelle zu dem Basisstationssubsystem gesendet wird, um eine Rückmeldung von dem Basisstationssubsystem über seine aktuellen Codec-Fähigkeiten hinsichtlich eines spezifischen ablaufenden Anrufs zu triggern.

3. Verfahren nach Anspruch 1, wobei die Ausführungsphase auf der auf IP basierenden A-Schnittstelle den Handover-Befehl von der Mobilvermittlungsstelle zu dem Basisstationssubsystem und eine Handover-Abgeschlossen-Nachricht von dem Basisstationssubsystem zu der Mobilvermittlungsstelle wiederverwendet.

4. Basisstationssubsystem (BSS) mit Mitteln, die dafür ausgelegt sind, eine Codec-Änderung für ablaufende Anrufe auf einer auf IP basierenden A-Schnittstelle mit einer Vorbereitungsphase und einer Ausführungsphase durchzuführen, wobei die Ausführungsphase das Senden einer Handover-Abgeschlossen-Nachricht von dem Basisstationssubsystem zu der Mobilvermittlungsstelle umfasst,
**dadurch gekennzeichnet, dass** die Mittel ferner für Folgendes ausgelegt sind:
- Empfangen einer Nachricht Internal Handover Enquiry während der Vorbereitungsphase, wobei die Nachricht Internal Handover Enquiry eine MSC-Preferred Codec List umfasst; und
- Senden einer Nachricht Internal Handover Required zu der Mobilvermittlungsstelle während der Vorbereitungsphase, wobei die Nachricht Internal Handover Required eine Zielzelle, eine aktuelle Codec-Fähigkeiten in der Zielzelle enthaltende Liste und eine IP/UDP-Terminierung in dem Basisstationssubsystem enthält.

5. Mobilvermittlungsstelle (MSC) mit Mitteln, die dafür ausgelegt sind, eine Codec-Änderung für ablaufende Anrufe auf einer auf IP basierenden A-Schnittstelle mit einer Vorbereitungsphase und einer Ausführungsphase durchzuführen, wobei die Ausführungsphase ein Senden eines Handover-Befehls von der Mobilvermittlungsstelle zu dem Basisstationssubsystem umfasst, und
**dadurch gekennzeichnet, dass** die Mittel ferner dafür ausgelegt sind, während der Vorbereitungsphase eine Nachricht Internal Handover Enquiry zu einem Basisstationssubsystem zu senden, und wobei die Nachricht Internal Handover Enquiry eine MSC-Preferred Codec List enthält und wobei die Mittel ferner dafür ausgelegt sind, während der Vorbereitungsphase eine Nachricht Internal Handover Required von dem Basisstationssubsystem zu empfangen, die eine Zielzelle, eine aktuelle Codec-Fähigkeiten in der Zielzelle enthaltende Liste und eine IP/UDP-Terminierung in dem Basisstationssubsystem enthält.

## Revendications

1. Un procédé d'exécution de changements de codec pour des appels en cours sur une interface A de type IP entre un sous-système de station de base et un centre de commutation mobile, dans lequel une fonctionnalité de transcodage est installée dans une passerelle média, le procédé étant basé sur une procédure de transfert et comprenant une phase de préparation et une phase d'exécution, dans lequel la phase d'exécution comprend un envoi d'une commande de transfert du centre de commutation mobile au sous-système de station de base et dans lequel des messages de signalisation sont envoyés entre le sous-système de station de base et le centre de commutation mobile,
**caractérisé en ce que** le procédé comprend les opérations suivantes :
- signalisation, au cours de ladite phase de préparation, à partir du centre de commutation mobile au sous-système de station de base, d'un message de demande de transfert interne, dans lequel ledit message de demande de transfert interne contient une liste de codecs préférés par le MSC, et
- signalisation, au cours de ladite phase de préparation, en réponse au message de demande de transfert interne, à partir du sous-système de station de base au centre de commutation mobile, d'un message de transfert interne demandé, ledit message de transfert interne demandé contenant une cellule cible, une liste contenant les capacités de codec actuelles dans ladite cellule cible et une terminaison IP/UDP sur ledit sous-système de station de base.

2. Un procédé selon la revendication 1, dans lequel le message de demande de transfert interne est envoyé par ledit centre de commutation mobile audit sous-système de station de base de façon à déclencher des informations en retour provenant dudit sous-système de station de base relatives à ses capacités de codec actuelles concernant un appel en cours spécifique.

3. Un procédé selon la revendication 1, dans lequel la phase d'exécution réutilise sur ladite interface A de type IP la commande de transfert du centre de commutation mobile au sous-système de station de base et un message de transfert terminé du sous-système de station de base au centre de commutation mobile.

4. Un sous-système de station de base (BSS) comprenant des moyens agencés de façon à exécuter un changement de codec pour des appels en cours sur une interface A de type IP avec une phase de préparation et une phase d'exécution, dans lequel la phase d'exécution comprend l'envoi d'un message de transfert terminé du sous-système de station de base à un centre de commutation mobile,
**caractérisé en ce que** les moyens sont agencés en outre de façon à
- recevoir, au cours de ladite phase de préparation, un message de demande transfert interne, dans lequel ledit message de demande transfert interne contient une liste de codecs préférés par le MSC, et
- transmettre, au cours de ladite phase de préparation, un message de transfert interne demandé au centre de commutation mobile, ledit message de transfert interne demandé contenant une cellule cible, une liste contenant les capacités de codec actuelles dans ladite cellule cible et une terminaison IP/UDP sur ledit sous-système de station de base.

5. Un centre de commutation mobile (MSC) comprenant des moyens agencés de façon à exécuter un changement de codec pour des appels en cours sur une interface A de type IP avec une phase de préparation et une phase d'exécution, dans lequel la phase d'exécution comprend un envoi d'une commande de transfert du centre de commutation mobile au sous-système de station de base, et
**caractérisé en ce que** les moyens sont agencés en outre de façon à transmettre, au cours de ladite phase de préparation, un message de demande transfert interne à un sous-système de station de base et dans lequel ledit message de demande transfert interne contient une liste de codecs préférés par le MSC, et dans lequel les moyens sont agencés en outre de façon à recevoir, au cours de ladite phase de préparation, un message de transfert interne demandé dudit sous-système de station de base contenant une cellule cible, une liste contenant les capacités de codec actuelles dans ladite cellule cible et une terminaison IP/UDP sur ledit sous-système de station de base.
